# EUROPÄISCHE PATENTSCHRIFT

(11) **EP 2 599 644 B1**
(45) Veröffentlichungstag und Bekanntmachung des Hinweises auf die Patenterteilung: **12.11.2014**
(21) Anmeldenummer: 12193152.1
(22) Anmeldetag: 19.11.2012
(51) Int. Cl.: B60B 33/08

(54) **Kugelrollen-Bauteil mit rastbarer Lagereinrichtung**
Ball rolling component with latchable storage device
Composant de roulettes avec installation de stockage pouvant être bloquée

(30) Priorität: 01.12.2011 DE 102011087587
(43) Veröffentlichungstag der Anmeldung: 05.06.2013
(73) Patentinhaber: Kipp Verpachtungen e.K., 72172 Sulz a.N. (DE)
(72) Erfinder: Schanz, Hans, 72189 Vöhringen (DE); Wiedemaier, Gerd, 72172 Sulz (DE)
(74) Vertreter: Kohler Schmid Möbus

(56) Entgegenhaltungen:
- US-A- 528 791
- US-A- 2 770 831
- US-A1- 2006 201 943

## Beschreibung

Die Erfindung betrifft Kugelrollen-Bauteil, umfassend
- eine Kugel, insbesondere Stahlkugel,
- eine Lagereinrichtung, in welcher die Kugel drehbar gelagert ist, und
- einen Lagerbolzen, der eine Ausnehmung aufweist, in der die Lagereinrichtung gehalten ist, so dass die Kugel aus dem Lagerbolzen teilweise herausragt, und der weiterhin ein innenliegendes oder außenliegendes Gewinde oder einen Passitz zur Befestigung des Lagerbolzens aufweist, insbesondere wobei eine Gewindeachse eines Gewindes oder eine Passsitzachse durch den Mittelpunkt der Kugel verläuft.

Eine solches Kugelrollen-Bauteil ist bekannt geworden durch die Firmendruckschrift "Förderelemente Transport- & Handhabungstechnik" der Firma Torwegge, Bielefeld, DE, Version "DE-2010", Seiten F38-F45.

Kugelrollen können zum Lagern und Führen von verschiedensten Bauteilen eingesetzt werden, beispielsweise von Schubfächern im Möbelbau- und Gerätebau, von Transportwagen oder von beweglichen Teilen an Maschinen. Die Bauteile rollen an einer Kugel, meist einer Stahlkugel, ab, um Reibung zu verringern.

Übliche Kugelrollen-Bauteile umfassen neben der Kugel eine Lagereinrichtung, in der die Kugel drehbar gelagert ist, sowie einen Lagerbolzen, in dem wiederum die Lagereinrichtung gehalten ist. Der Lagerbolzen wird an einer größeren Struktur, etwa in einem Möbelstück, einer Maschine oder an einer Gebäudewand befestigt. Meist werden dazu Gewinde eingesetzt.

Das eingangs erwähnte Kugelrollen-Bauteil von Torwegge, etwa die "MINI-Kugelrollen" dargestellt auf Seite F45 der Firmendruckschrift, weisen als Lagereinrichtung ein Kugellager auf. Das Kugellager und die Kugel werden von einer Ummantelung zusammengehalten, die auf einen Lagerbolzen plastisch angeformt ist. Das Kugellager ermöglicht sehr geringe Lagerreibung; die Fertigung dieser Kugelrollen-Bauteile ist aber relativ aufwendig und teuer.

Ebenfalls bekannt sind Kugeldruckschrauben, beschrieben in der Firmendruckschrift "Spanntechnik Normenteile Bedienteile" der Firma "Heinrich Kipp Werk KG", Sulz a.N., DE, Edition 2010, Seite 530. Hierbei wird eine Kugel in einem Lagerbolzen unmittelbar gelagert, wobei die Kugel dadurch gehalten wird, dass ein Kragenbereich durch plastische Verformung verengt wird. Bei diesen Kugeldruckschrauben kann es beim Abrollen der Kugel im Lagerbolzen zu erhöhter Reibung kommen, insbesondere wenn Metall auf Metall gleitet.

Durch die Firmendruckschrift "3. Igubal ...plastics" der Firma igus GmbH, Köln, DE, Fassung "06/2011-Deutsch-MAT0070571", Seiten 586-589, sind Axialgelenke bekannt geworden, bei denen ein erster Gelenkarm mit einem Kugelstumpf in eine Kugelkappe eingreift, welche ihrerseits in einer Ausnehmung eines zweiten Gelenkarms verrastbar ist. Der erste Gelenkarm weist ein Außengewinde, und der zweite Gelenkarm weist ein Innengewinde sowie ein Sechskantprofil auf.

US 2 770 831 A offenbart ein Kugelrollen-Bauteil gemäß dem Oberbegriff des Anspruchs 1 und ein Bausatz gemäß dem Oberbegriff des Anspruchs 14.

### Aufgabe der Erfindung

Der Erfindung liegt die Aufgabe zugrunde, ein Kugelrollen-Bauteil zur Verfügung zu stellen, welches kostengünstig und mit wenig Aufwand zu fertigen ist und eine reibungsarme Kugellagerung ermöglicht.

### Kurze Beschreibung der Erfindung

Diese Aufgabe wird gelöst durch ein Kugelrollen-Bauteil der eingangs genannten Art, das dadurch gekennzeichnet ist, dass die Lagereinrichtung eine Lagerschale umfasst, welche eine im Wesentlichen halbkugelförmige Lagerpfanne zur Anlage der Kugel und mehrere Federarme ausbildet, und dass die Lagerschale in der Ausnehmung verrastet ist.

Mittels der Lagerschale kann für die Kugel durch die Lagerpfanne der Lagerschale eine reibungsarmes Lager zur Verfügung gestellt werden. Die Lagerpfanne weist typischerweise eine glatte Oberfläche, meist aus Kunststoff auf, an der die Kugel leicht abgleiten kann. Für eine besonders geringe Reibung können die Materialien von Kugel und Lagerpfanne aufeinander abgestimmt werden; bewährt haben sich beispielsweise Stahlkugeln und Polyamid-Lagerpfannen.

Das Kugelrollen-Bauteil kann sehr einfach zusammengebaut werden, indem die Lagerschale in die Ausnehmung gedrückt wird; die Kugel wird üblicherweise anschließend in die Lagerschale eingeführt. Spätestens nach dem Einführen der Kugel ist die Lagerschale in der Ausnehmung durch die erfindungsgemäße Verrastung gesichert. Insbesondere sind keine plastischen Verformungsprozesse beim Zusammenbau nötig; die Elastizität der Federarme reicht für den Zusammenbau aus.

Mittels des Gewindes oder des Passsitzes kann der Lagerbolzen leicht an einer größeren Struktur befestigt werden, etwa durch Anschrauben oder Verspannen ("Presssitz").

Die Kugel ist mit ihrem herausragenden Teil frei zugänglich, so dass an der Kugel andere Bauteile abgerollt werden können (etwa zu Führungs- und Lagerzwecken). Die Kugel ist in jede beliebige Richtung frei drehbar.

Die Ausnehmung ist typischerweise zentral und stirnseitig im Lagerbolzen ausgebildet, gegenüber dem Gewinde bzw. dem Passsitz. Die Ausnehmung ist bevorzugt ebenfalls im Wesentlichen halbkugelförmig pfannenartig ausgebildet. Man beachte, dass die Lagerschale in ihrer Außenkontur beliebig, beispielsweise auch zylindrisch, ausgebildet sein kann. Die Ausnehmung entspricht in ihrer Geometrie im Wesentlichen dieser Außenkontur der Lagerschale, so dass die Lagerschale gut am Lagerbolzen abgestützt werden kann.

Erfindungsgemäße Kugelrollen-Bauteile können insbesondere eingesetzt werden für Kugelrollen-Auflagen oder Kugelrollen-Beplankungen, Leitsysteme und Seitenführungen.

### Bevorzugte Ausführungsformen der Erfindung

Bei einer bevorzugten Ausführungsform des erfindungsgemäßen Kugelrollen-Bauteils ist die Lagerschale mit den Federarmen in der Ausnehmung verrastet, wobei im verrasteten Zustand die Federarme die Lagerschale über der Lagerpfanne so weit verengen, dass die Kugel in der Lagerpfanne gehalten ist. Die Federarme gestatten typischerweise ein leichtes Ein- und Ausführen der Kugel in die Lagerschale bzw. aus der Lagerschale heraus, solange die Lagerschale noch nicht in der Ausnehmung verrastet ist. Nachdem die Lagerschale in der Ausnehmung eingeführt und die Kugel in die Lagerposition gebracht ist, sind die Federarme elastisch in eine Position gedrückt, in der sie einerseits das Herausnehmen der Lagerschale aus der Ausnehmung blockieren ("Verrastung") und andererseits ein Herausnehmen der Kugel aus der Lagerschale blockieren ("weitere Verrastung"). Die Federarme führen bevorzugt die Kugelform der Lagerpfanne geringfügig über die Mittelebene der Kugel(-lagerung) hinaus fort.

Besonders vorteilhaft ist eine Ausführungsform, bei der zumindest die der Kugel zugewandten Oberflächenbereiche der Lagerschale aus Kunststoff gefertigt sind. Mit anderen Worten, die Lagerschale (insbesondere die Lagerpfanne, aber auch die Federarme) bildet zur Kugel hin eine Kunststoffoberfläche aus. Mit Kunststoffoberflächen kann kostengünstig und wartungsarm eine geringe Reibung erreicht werden.

Bei einer vorteilhaften Weiterbildung dieser Ausführungsform ist die Lagerschale vollständig aus Kunststoff oder einem Kunststoff-Verbundwerkstoff, insbesondere mit einer Kunststoffmatrix, gefertigt. Dadurch kann die Lagerschale einfach und kostengünstig gefertigt werden. Durch Einsatz eines Kunststoff-Verbundwerkstoffs können funktionelle Verbesserungen, etwa eine höhere Festigkeit oder Verschleißfestigkeit, erreicht werden. Durch Graphiteinlagerungen im Kunststoff kann eine Selbstschmierung erreicht werden.

Bei einer anderen, bevorzugten Weiterbildung ist der Kunststoff ein Polyamid oder Polytetrafluorethylen. Diese Materialien haben sich in der Praxis besonders bewährt, insbesondere in Verbindung mit Stahlkugeln.

Vorteilhaft ist auch eine Ausführungsform, bei der die Ausnehmung mit einer Rastkante oder Rastnut, insbesondere mit einer umlaufenden Rastkante oder Rastnut, ausgebildet. Ebenfalls vorteilhaft ist eine Ausführungsform, bei der an den Federarmen jeweils ein nach außen vorstehender Rastwulst oder eine nach außen vorstehende Rastnase ausgebildet ist. Dadurch kann die Verrastung auf einfache Weise realisiert werden. Der Rastwulst bzw. die Rastnase weisen radial nach außen, um im verrasteten Zustand unter eine Rastkante oder in eine Rastnut des Lagerbolzens im Bereich der Ausnehmung einzugreifen. Im Einzelfall kann auch nur mit einer Oberkante der Federarme eine Verrastung etwa an einer Rastkante eingerichtet werden. Grundsätzlich können jedoch beliebige Rastmechaniken im Rahmen der Erfindung eingesetzt werden.

Bevorzugt ist weiterhin eine Ausführungsform, bei der der Lagerbolzen außenseitig zumindest in einem Abschnitt mit einem nicht-kreisförmigen Querschnitt, insbesondere sechskantförmig, ausgebildet ist. Am nicht-kreisförmigen Abschnitt kann der Lagerbolzen leicht verdreht werden (etwa zum Einschrauben) oder gegen ein Verdrehen gesichert werden (etwa bei Befestigung mittels Presssitz), so dass die Handhabung und Befestigung des Lagerbolzens vereinfacht ist. Üblicherweise werden gleichmäßig polygonale Querschnitte (etwa Vierkant oder Sechskant) bevorzugt. Der nicht-kreisförmige Abschnitt erstreckt sich typischerweise über den gesamten Umfang des Lagerbolzens, um in jeder Verdrehposition einen guten Zugang zu bieten.

Bei einer vorteilhaften Ausführungsform liegt die Lagerschale flächig in der Ausnehmung an. Dadurch wird eine gleichmäßige Kraftübertragung von der Kugel in die Lagerschale erreicht; Kraftspitzen (die leicht zu Beschädigungen wie Brüchen führen können) werden vermieden.

Bevorzugt ist weiterhin eine Ausführungsform, die vorsieht, dass der Lagerbolzen im Bereich eines der Ausnehmung abgewandten Endes mit einem geringeren Durchmesser ausgebildet ist als im Bereich der Ausnehmung für die Lagereinrichtung, insbesondere wobei dieser Bereich des der Ausnehmung abgewandten Endes das außenliegende Gewinde oder den Passsitz ausbildet. In vielen Fällen erleichtert der geringere Durchmesser die Befestigung des Lagerbolzens an einer größeren Struktur. Der dazu verbreiterte Bereich der Ausnehmung kann dann auch gut auf der größeren Struktur abgestützt werden.

Bei einer bevorzugten Weiterbildung dieser Ausführungsform ist vorgesehen, dass der Lagerbolzen in einem Bereich zwischen dem Bereich des der Ausnehmung abgewandten Endes und dem Bereich der Ausnehmung für die Lagereinrichtung einen geringeren Durchmesser aufweist als im Bereich des der Ausnehmung abgewandten Endes. Dies erleichtert insbesondere die Befestigung über Verschraubungen.

Bevorzugt ist auch eine Ausführungsform, bei der der Lagerbolzen ein außenliegendes Gewinde oder einen Passsitz aufweist, wobei sich das außenliegende Gewinde oder der Passsitz nur über einen Teil, insbesondere einen von der Ausnehmung abgewandten Teil, der Länge des Lagerbolzens erstreckt. Dadurch bleibt der Lagerbolzen über den übrigen Teil auch im montierten Zustand gut handhabbar; der übrige Teil kann insbesondere einen Abschnitt mit nicht-kreisförmigem Querschnitt ausbilden. Alternativ kann sich auch das außenliegende Gewinde oder der Passsitz über die volle Länge des Lagerbolzens erstrecken; dadurch kann eine geringe Bauhöhe über der Struktur, in oder an der der Lagerbolzen befestigt wird, erreicht werden.

Eine andere Ausführungsform sieht vor, dass der Lagerbolzen über seine gesamte Länge den gleichen Außendurchmesser aufweist. Dies erleichtert die Handhabung, etwa mittels eines Schraubenschlüssels, und ist einfach zu fertigen. Insbesondere bei innenliegendem Gewinde kann der Lagerbolzen die Außengestalt eines geraden Zylinders mit kreisrunder Grundfläche aufweisen; es sind aber auch andere Grundflächen, etwa polygonale (vor allem sechseckige) oder ovale Grundflächen möglich.

Eine andere, bevorzugte Ausführungsform sieht vor, dass die Federarme durch parallel zu einer Achse des Gewindes oder einer Achse des Passsitzes verlaufende Spalte voneinander getrennt sind. Die Spalte gestatten eine elastische Verformung der Federarme radial nach innen oder außen, was insbesondere zum Verrasten der Lagereinrichtung und zum Blockieren der Kugel genutzt werden kann.

In den Rahmen der vorliegenden Erfindung fällt auch ein Bausatz für ein erfindungsgemäßes Kugelrollen-Bauteil, umfassend
- eine Kugel, insbesondere Stahlkugel,
- eine Lagereinrichtung, in welcher die Kugel drehbar gelagert werden kann,
- und einen Lagerbolzen, der eine Ausnehmung aufweist, in der die Lagereinrichtung gehalten werden kann, und der weiterhin ein innenliegendes oder außenliegendes Gewinde oder einen Passsitz aufweist,
wobei die Lagereinrichtung eine Lagerschale umfasst, welche eine im Wesentlichen halbkugelförmige Lagerpfanne zur Anlage der Kugel und mehrere Federarme ausbildet,
und wobei die Lagerschale in der Ausnehmung verrastbar ist.
Der Bausatz kann sehr einfach zu einem erfindungsgemäßen Kugelrollen-Bauteil zusammengesetzt werden.

Weitere Vorteile der Erfindung ergeben sich aus der Beschreibung und der Zeichnung. Ebenso können die vorstehend genannten und die noch weiter ausgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

### Detaillierte Beschreibung der Erfindung und Zeichnung

Die Erfindung ist in der Zeichnung dargestellt und wird anhand von Ausführungsbeispielen näher erläutert. Es zeigen:
- Fig. 1a: eine erste Ausführungsform eines erfindungsgemäßen Kugelrollen-Bauteils umfassend Kugel, Lagereinrichtung und Lagerbolzen, mit innenliegendem Gewinde und sechskantförmigem Außenquerschnitt, in Explosionsdarstellung;
- Fig. 1b: die Ausführungsform von Fig. 1 a in Aufsicht auf die Seite der Kugel;
- Fig. 1c: die Ausführungsform von Fig. 1 a in einer axialen Querschnittsdarstellung;
- Fig. 2a: eine zweite Ausführungsform eines erfindungsgemäßen Kugelrollen-Bauteils, mit einem Passsitz, in Explosionsdarstellung;
- Fig. 2b: die Ausführungsform von Fig. 2a in Aufsicht auf die Seite der Kugel;
- Fig. 2c: die Ausführungsform von Fig. 2a in einer axialen Querschnittsdarstellung;
- Fig. 3a: die Lagerschale der ersten Ausführungsform in Aufsicht auf die Öffnungsseite;
- Fig. 3b: die Lagereinrichtung von Fig. 3a in einer axialen Querschnittsdarstellung;
- Fig. 3c: die Lagereinrichtung von Fig. 3a in einer Seitenansicht;
- Fig. 3d: die Lagereinrichtung von Fig. 3a in einer Schrägansicht;
- Fig. 4a, 4b: eine dritte Ausführungsform eines erfindungsgemäßen Kugelrollen-Bauteils, mit Außengewinde, Innensechskant und Lagerschale mit zylindrischer Außenkontur, in Aufsicht von der Seite der Kugel (Fig. 4a) und im axialen Querschnitt (Fig. 4b);
- Fig. 5a, 5b: eine vierte Ausführungsform eines erfindungsgemäßen Kugelrollen-Bauteils, mit Außengewinde und Lagerschale mit zylindrischer Außenkontur, in Aufsicht von der Seite der Kugel (Fig. 5a) und im axialen Querschnitt (Fig. 5b).

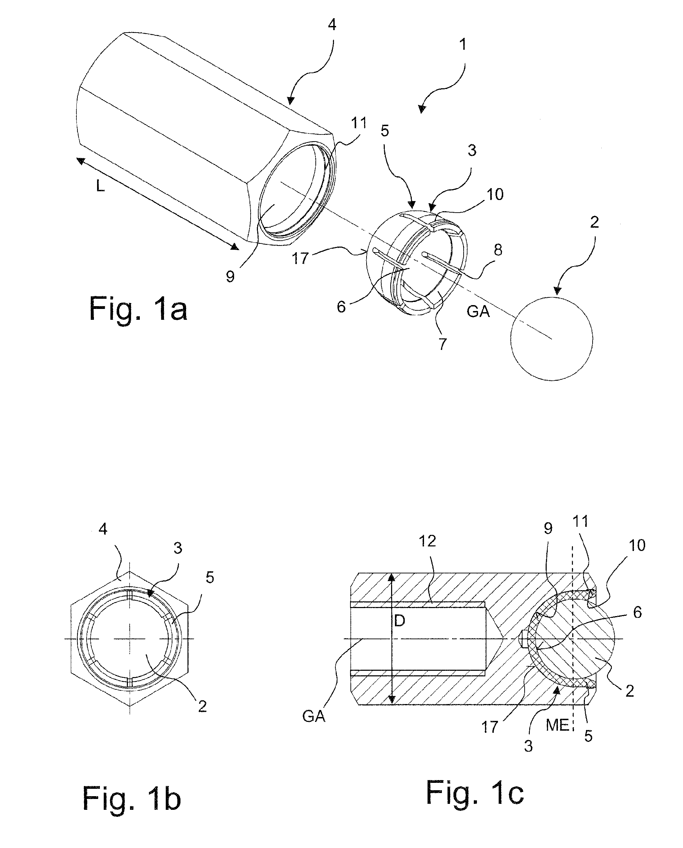

Die **Figuren 1a-1c** zeigen beispielhaft eine erste Ausführungsform eines erfindungsgemäßen Kugelrollen-Bauteils 1, umfassend eine Kugel 2, eine Lagereinrichtung 3 und einen Lagerbolzen 4. In der Explosionsdarstellung von Fig. 1 a sind diese Einzelteile 2, 3, 4 nicht zusammengebaut abgebildet; im nicht zusammengebauten Zustand bilden diese Einzelteile 2, 3, 4 einen Bausatz für ein erfindungsgemäßes Kugelrollenbauteil 1. Im folgenden wird der zusammengebaute Zustand beschrieben (siehe dazu insbesondere Fig. 1b und 1c); das zusammengebaute Kugelrollen-Bauteil 1 wird auch oft einfach "Kugelrolle" genannt.

Die Kugel 2 ist in der Lagereinrichtung 3 frei drehbar gelagert und ragt zu etwa ¼ (bezogen auf ihren Durchmesser) aus der Lagereinrichtung 3 heraus. Die Lagereinrichtung 3 besteht hier aus einer Lagerschale 5, welche eine im Wesentlichen halbkugelförmige Lagerpfanne 6 für die Anlage der Kugel 2 sowie sechs Federarme 7 ausbildet (Man beachte, dass erfindungsgemäß auch eine andere Anzahl von Federarmen gewählt werden kann; insbesondere können auch zwei, drei vier, fünf, oder mehr als sechs Federarme gewählt werden). Die Lagerschale 5 ist in dieser Ausführungsform vollständig aus einem Kunststoff, etwa Polyamid, gefertigt. Die Kugel 2 kann an der Oberfläche der Lagerschale 5 im Bereich der Lagerpfanne 6 und der Innenseiten der Federarme 7 reibungsarm abgleiten. Die Federarme 7 sind durch Spalte 8 voneinander getrennt, die im Wesentlichen parallel zu einer Längsrichtung (vgl. auch Achse GA des Gewindes 12) des Kugelrollen-Bauteils 1 verlaufen. Durch die Spalten 8 können die Federarme 7 elastisch radial nach innen und außen gebogen werden.

Die Lagerschale 5 ist im zusammengebauten Zustand in eine Ausnehmung 9 des Lagerbolzens 4 eingefügt. Die Lagerschale 5 liegt dabei mit ihrer Außenseite 17 flächig an der Ausnehmung 9 an.

Im zusammengebauten Zustand greifen Rastwulste 10 an den Federarmen 7 in eine umlaufende Rastnut 11 am Lagerbolzen 4 ein, wobei in den elastischen Federarmen 7 gespeicherte Kräfte die Rastwulste 10 radial nach außen in die Rastnut 11 drücken; alternativ oder zusätzlich spreizt die Kugel 2 die Federarme 7. Dadurch wird die Lagerschale 5 sicher in der Ausnehmung 9 gehalten ("Verrastung"). Gleichzeitig blockieren die Federarme 7 durch einen Übergriff über die Mittelebene ME der Kugel 2 hinaus (in Fig. 1c nach rechts) ein Herausfallen der Kugel 2 aus der Lagereinrichtung 3 ("weitere Verrastung"); der Übergriff verengt die Lagerschale 5 über (in Fig. 1c rechts) der Lagerpfanne 6 auf eine Öffnungsweite kleiner als der Durchmesser der Kugel 2.

Der Lagerbolzen 4 weist weiterhin ein Innengewinde 12 auf, dessen Gewindeachse GA in Längsrichtung des Lagerbolzens 4 verläuft und auch durch den Mittelpunkt der Kugel 2 im montierten Zustand verläuft. Mittels des Innengewindes 12 kann der Lagerbolzen 4 an einer größeren Struktur befestigt werden (nicht dargestellt). Der Lagerbolzen 4 weist hier einen über seine gesamte Länge L konstanten Durchmesser D auf; der Außenquerschnitt ist einheitlich sechskantförmig, was eine Handhabung mit einem Schraubenschlüssel oder einem anderen, geeigneten Werkzeug erleichtert.

Für einen Zusammenbau des Kugelrollen-Bauteils 1 wird zunächst die Lagerschale in die Ausnehmung 9 eingesetzt, und sodann die Kugel 2 in die Lagerschale 5 eingelegt. Man beachte, dass grundsätzlich auch die Kugel zunächst in die Lagerschale 5 und dann die Lagerschale 5 samt Kugel 2 in die Ausnehmung 9 eingesetzt werden kann; dies ist jedoch mit sehr viel stärkerem Kraftaufwand verbunden.

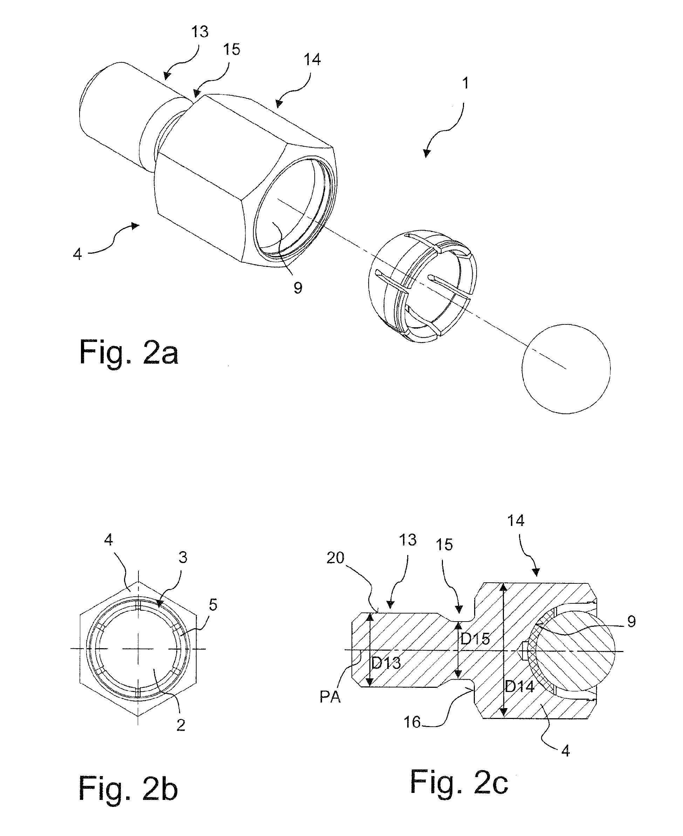

Die **Figuren 2a bis 2c** zeigen eine zweite Ausführungsform eines erfindungsgemäßen Kugelrollen-Bauteils 1. Die zweite Ausführungsform ähnelt der ersten Ausführungsform von Fig. 1a-1c; es werden im Folgenden nur die Unterschiede erläutert.

In der zweiten Ausführungsform weist der Lagerbolzen 4 im Bereich 13 eines der Ausnehmung 9 abgewandten Endes einen Durchmesser D13 auf, der kleiner ist als ein Durchmesser D14 in einem Bereich 14 der Ausnehmung 9. Weiterhin ist in einem Bereich 15 zwischen den Bereichen 13 und 14 ein Durchmesser D15 vorgesehen, der wiederum kleiner ist als der Durchmesser D13 im Bereich 13 des der Ausnehmung 9 abgewandten Endes.

Der Bereich 13 bildet hier einen Passsitz 20 zur klemmenden Befestigung an einer größeren Struktur; der Passsitz 20 bildet eine glatte, bezüglich einer Passsitzachse PA zylindrische Oberfläche aus. Der Bereich 13 kann aber auch mit einem Außengewinde versehen werden, um den Lagerbolzen 4 in einer größeren Struktur zu verschrauben. Eine Kante 16 kann in beiden Fällen an diese Struktur als Anschlag angelegt werden.

Der Bereich 14 ist wiederum für eine leichte Handhabung mit einem sechseckigem Außenquerschnitt gefertigt.

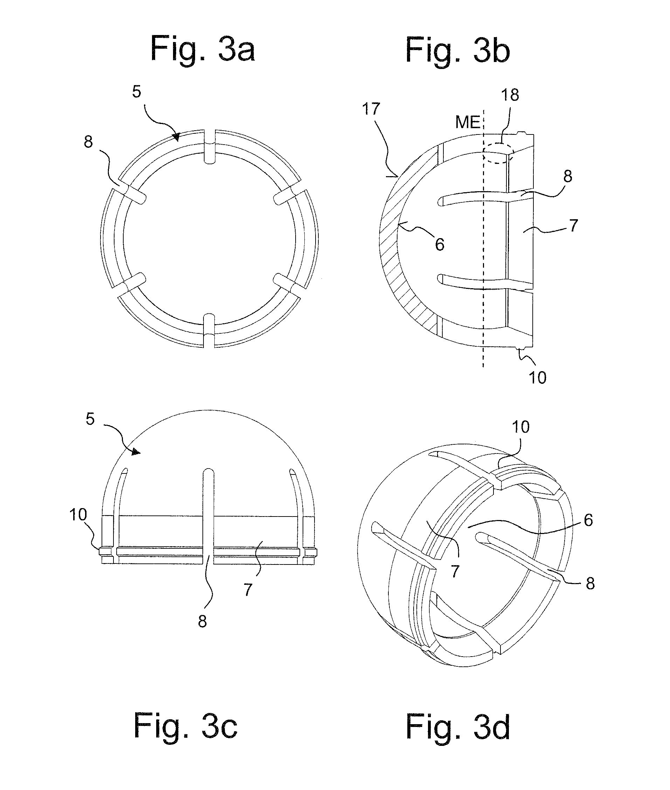

Die **Figuren 3a bis 3d** zeigen die Lagerschale 5 der ersten Ausführungsform im Detail.

Die Lagerschale 5 verfügt hier über eine im Wesentlichen einheitliche Wandstärke, sodass die Außenseite 17 der Lagerschale 5 im Wesentlichen der Kontur der halbkugelförmigen Lagerpfanne 6 und der Innenseiten der Federarme 7 folgt. Die Lagerpfanne 6 geht direkt in die Federarme 7 über. Die Spalte 8 zwischen den Federarmen 7 verlaufen beidseits der Mittelebene ME der Kugellagerung. Die Federarme 7 übergreifen in einem Bereich 18 die Mittelebene ME, so dass sie die Öffnung der Lagerschale 5 soweit verengen können, dass eine gehaltene Kugel nicht herausfallen kann. Zum Einfügen der Kugel müssen die Federarme 7 zumindest im Bereich 18 elastisch nach außen gebogen werden.

Im verrasteten Zustand greifen die Rastwulste 10 in eine Rastnut des Lagerbolzens ein, wodurch sowohl die Lagerschale 5 als auch die Kugel gehalten und gesichert werden.

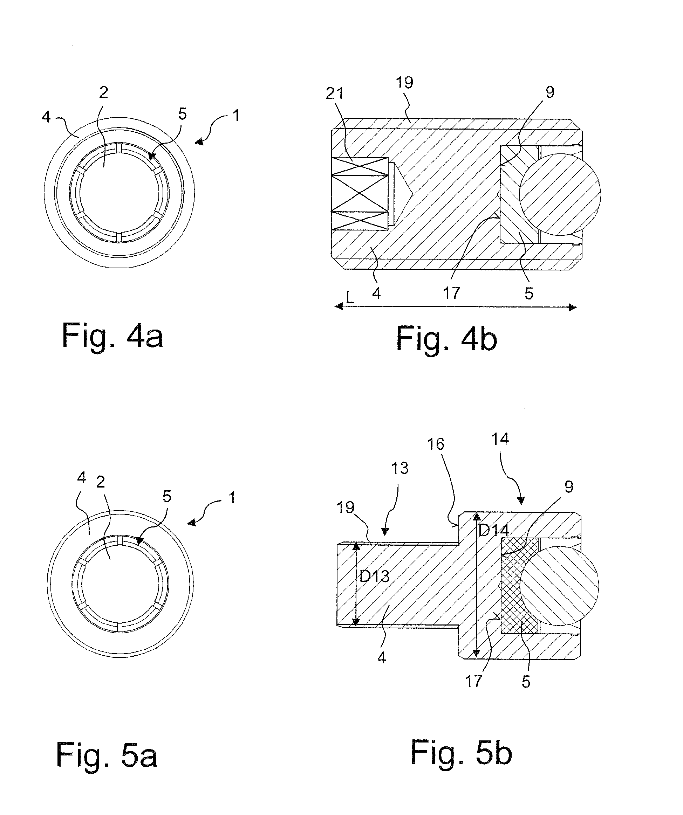

Die **Figuren 4a bis 4b** zeigen eine dritte Ausführungsform eines erfindungsgemäßen Kugelrollen-Bauteils 1 in Aufsicht und im Längsschnitt. Die dritte Ausführungsform ähnelt der ersten Ausführungsform von Fig. 1a-1c; es werden im Folgenden nur die Unterschiede erläutert.

Der Lagerbolzen 4 ist hier über seine gesamte Länge L mit einem Außengewinde 19 versehen, um den Lagerbolzen 4 an einer größeren Struktur zu befestigen. Weiterhin verfügt der Lagerbolzen 4 zusätzlich über einen Innensechskant 21, mit dem der Lagerbolzen 4 in die größere Struktur ein- und ausgeschraubt werden kann. Bei der dritten Ausführungsform ist daher die Befestigung an einer größeren Struktur besonders einfach und mit großer Kraft möglich.

Weiterhin weist die Lagerschale 5 hier keine einheitliche Wandstärke auf, sondern ist im Wesentlichen mit einer zylindrischen Außenkontur 17 (mit kreisförmiger Grundfläche) versehen. Entsprechend ist auch die Ausnehmung 9 zylindrisch ausgebildet. Dies vereinfacht insbesondere die Fertigung der Ausnehmung 9 im Lagerbolzen 4. Die Außenkontur 17 liegt wiederum flächig an der Ausnehmung 9 an, wodurch Kraftspitzen in der Lagerschale 5 vermieden werden.

Die Figuren 5a bis 5b zeigen eine vierte Ausführungsform eines erfindungsgemäßen Kugelrollen-Bauteils 1 in Aufsicht und im Längsschnitt. Die vierte Ausführungsform ähnelt der ersten Ausführungsform von Fig. 1a-1c; es werden im Folgenden nur die Unterschiede erläutert.

In Bereich 13 des der Ausnehmung 9 abgewandten Endes des Lagerbolzens 4 ist ein geringerer Durchmesser D13 als im Bereich 14 der Ausnehmung 9 mit Durchmesser D14 vorgesehen. Der Bereich 13 trägt hier ein Außengewinde 19. Das Einschrauben des Lagerbolzens 4 wird durch den Anschlag der Kante 16 begrenzt. Alternativ kann der Bereich 13 mit einem Passsitz (also ohne Gewinde) ausgebildet sein.

Weiterhin ist auch in dieser Ausführungsform die Lagerschale 5 mit einer zylindrischen Außenkontur 17 versehen, die flächig an der ebenfalls zylindrischen Ausnehmung 9 anliegt.

## Patentansprüche

1. Kugelrollen-Bauteil (1), umfassend
- eine Kugel (2), insbesondere Stahlkugel,
- eine Lagereinrichtung (3), in welcher die Kugel (2) drehbar gelagert ist, und
- einen Lagerbolzen (4), der eine Ausnehmung (9) aufweist, in der die Lagereinrichtung (3) gehalten ist, so dass die Kugel (2) aus dem Lagerbolzen (4) teilweise herausragt, und der weiterhin ein innenliegendes oder außenliegendes Gewinde (12, 19) oder einen Passsitz (20) zur Befestigung des Lagerbolzens (4) aufweist, insbesondere wobei eine Gewindeachse (GA) eines Gewindes oder eine Passsitzachse (PA) durch den Mittelpunkt der Kugel (2) verläuft,
wobei die Lagereinrichtung (3) eine Lagerschale (5) umfasst, welche eine im Wesentlichen halbkugelförmige Lagerpfanne (6) zur Anlage der Kugel (2) ausbildet, und wobei die Lagerschale (5) in der Ausnehmung (9) verrastet ist,
**dadurch gekennzeichnet,**
**dass** die Lagerschale (5) weiterhin mehrere Federarme (7) ausbildet, und dass die Lagerschale (5) mittels der Federarme (7) in der Ausnehmung (9) verrastet ist, wobei im verrasteten Zustand die Federarme (7) die Lagerschale (5) über der Lagerpfanne (6) so weit verengen, dass die Kugel (2) in der Lagerpfanne (6) gehalten ist.

2. Kugelrollen-Bauteil (1) nach Anspruch 1, **dadurch gekennzeichnet, dass** zumindest die der Kugel (2) zugewandten Oberflächenbereiche der Lagerschale (5) aus Kunststoff gefertigt sind.

3. Kugelrollen-Bauteil (1) nach Anspruch 2, **dadurch gekennzeichnet, dass** die Lagerschale (5) vollständig aus Kunststoff oder einem Kunststoff-Verbundwerkstoff, insbesondere mit einer Kunststoffmatrix, gefertigt ist.

4. Kugelrollen-Bauteil (1) nach Anspruch 2 oder 3, **dadurch gekennzeichnet, dass** der Kunststoff ein Polyamid oder Polytetrafluorethylen ist.

5. Kugelrollen-Bauteil (1) nach einem der vorhergehenden Ansprüche, **dadurch gekennzeichnet, dass** die Ausnehmung (9) mit einer Rastkante oder Rastnut (11), insbesondere mit einer umlaufenden Rastkante oder Rastnut (11), ausgebildet ist.

6. Kugelrollen-Bauteil (1) nach einem der vorhergehenden Ansprüche, **dadurch gekennzeichnet, dass** an den Federarmen (7) jeweils ein nach außen vorstehender Rastwulst (10) oder eine nach außen vorstehende Rastnase ausgebildet ist.

7. Kugelrollen-Bauteil (1) nach einem der vorhergehenden Ansprüche, **dadurch gekennzeichnet, dass** der Lagerbolzen (4) außenseitig zumindest in einem Abschnitt mit einem nicht-kreisförmigen Querschnitt, insbesondere sechskantförmig, ausgebildet ist.

8. Kugelrollen-Bauteil (1) nach einem der vorhergehenden Ansprüche, **dadurch gekennzeichnet, dass** die Lagerschale (5) flächig in der Ausnehmung (9) anliegt.

9. Kugelrollen-Bauteil (1) nach einem der vorhergehenden Ansprüche, **dadurch gekennzeichnet, dass** der Lagerbolzen (4) im Bereich (13) eines der Ausnehmung abgewandten Endes mit einem geringeren Durchmesser (D13) ausgebildet ist als im Bereich (14) der Ausnehmung (9) für die Lagereinrichtung (3), insbesondere wobei dieser Bereich (13) des der Ausnehmung (9) abgewandten Endes das außenliegende Gewinde (19) oder den Passsitz (20) ausbildet.

10. Kugelrollen-Bauteil (1) nach Anspruch 9, **dadurch gekennzeichnet, dass** der Lagerbolzen (4) in einem Bereich (15) zwischen dem Bereich (13) des der Ausnehmung (9) abgewandten Endes und dem Bereich (14) der Ausnehmung (9) für die Lagereinrichtung (3) einen geringeren Durchmesser (D15) aufweist als im Bereich (13) des der Ausnehmung (9) abgewandten Endes.

11. Kugelrollen-Bauteil (1) nach einem der vorhergehenden Ansprüche, **dadurch gekennzeichnet, dass** der Lagerbolzen (4) ein außenliegendes Gewinde (19) oder einen Passsitz (20) aufweist, wobei sich das außenliegende Gewinde (19) oder der Passsitz (20) nur über einen Teil, insbesondere einen von der Ausnehmung abgewandten Teil, der Länge des Lagerbolzens (4) erstreckt.

12. Kugelrollen-Bauteil (1) nach einem der vorhergehenden Ansprüche, **dadurch gekennzeichnet, dass** der Lagerbolzen (4) über seine gesamte Länge (L) den gleichen Außendurchmesser (D) aufweist.

13. Kugelrollen-Bauteil (1) nach einem der vorhergehenden Ansprüche, **dadurch gekennzeichnet, dass** die Federarme (7) durch parallel zu einer Achse (GA) des Gewindes oder einer Achse (PA) des Passsitzes verlaufende Spalte (8) voneinander getrennt sind.

14. Bausatz für ein Kugelrollen-Bauteil (1) nach einem der vorhergehenden Ansprüche, umfassend
- eine Kugel (2), insbesondere Stahlkugel,
- eine Lagereinrichtung (3), in welcher die Kugel (2) drehbar gelagert werden kann,
- und einen Lagerbolzen (4), der eine Ausnehmung (9) aufweist, in der die Lagereinrichtung (3) gehalten werden kann, und der weiterhin ein innenliegendes oder außenliegendes Gewinde (12, 19) oder einen Passsitz (20) aufweist,
wobei die Lagereinrichtung (3) eine Lagerschale (5) umfasst, welche eine im Wesentlichen halbkugelförmige Lagerpfanne (6) zur Anlage der Kugel (2)
wobei die Lagerschale (5) in der Ausnehmung (9) verrastbar ist,
und **dadurch gekennzeichnet, daß**
die Lagerschale (5) mehrere Federarme (7) ausbildet und daß die Lagerschale (5) mittels der Federarme (7) in der Ausnehmung (9) verrastbar ist, wobei im verrasteten Zustand die Federarme (7) die Lagerschale (5) so weit verengen, dass die Kugel (2) in der Lagerpfanne (6) gehalten ist.

## Claims

1. Ball caster component (1) comprising
- a ball (2), in particular a steel ball,
- a bearing means (3), in which the ball (2) is rotatably mounted, and
- a bearing pin (4) having a recess (9) in which the bearing means (3) is held so that the ball (2) partially protrudes from the bearing pin (4), and further having an internal or external thread (12, 19) or a seat (20) for securing the bearing pin (4), in particular wherein a thread's axis (GA) of a thread or a seat axis (PA) extends through the center of the ball (2), wherein the bearing means (3) comprises a bearing shell (5) which forms a substantially semi-spherical bearing cup (6) for abutment of the ball (2), and wherein the bearing shell (5) is locked in the recess (9), **characterized in that**
the bearing shell (5) furthermore forms a plurality of spring arms (7), and the bearing shell (5) is locked in the recess (9) by means of the spring arms (7), wherein in the locked state, the spring arms (7) narrow the bearing shell (5) above the bearing cup (6) to such an extent that the ball (2) is held in the bearing cup (6).

2. Ball caster component (1) according to claim 1, **characterized in that** at least the surface areas of the bearing shell (5) facing the ball (2) are made of plastic material.

3. Ball caster component (1) according to claim 2, **characterized in that** the bearing shell (5) is completely made of plastic material or a plastic composite material, in particular with a plastic matrix.

4. Ball caster component (1) according to claim 2 or 3, **characterized in that** the plastic material is a polyamide or polytetrafluoroethylene.

5. Ball caster component (1) according to one of the preceding claims, **characterized in that** the recess (9) has a locking edge or locking groove (11), in particular a circumferential locking edge or locking groove (11).

6. Ball caster component (1) according to one of the preceding claims, **characterized in that** each spring arm (7) has an outwardly projecting detent bead (10) or an outwardly projecting latching lug.

7. Ball caster component (1) according to one of the preceding claims, **characterized in that** at least one section of the outer side of the bearing pin (4) has a non-circular cross-section, in particular a hexagonal cross-section.

8. Ball caster component (1) according to one of the preceding claims, **characterized in that** the bearing shell (5) lies flat in the recess (9).

9. Ball caster component (1) according to one of the preceding claims, **characterized in that** the diameter (D13) of the bearing pin (4) in the region (13) of its end facing away from the recess is smaller than in the region (14) of the recess (9) for the bearing means (3), in particular, wherein this region (13) of the end facing away from the recess (9) forms the external thread (19) or the seat (20).

10. Ball caster component (1) according to claim 9, **characterized in that** the diameter (D15) of the bearing pin (4) in a region (15) between the region (13) of the end facing away from the recess (9) and the region (14) of the recess (9) for the bearing means (3) is smaller than in the region (13) of the end facing away from the recess (9).

11. Ball caster component (1) according to one of the preceding claims, **characterized in that** the bearing pin (4) has an external thread (19) or a seat (20), wherein the external thread (19) or the seat (20) only extend over part of the length of the bearing pin (4), in particular over a part facing away from the recess.

12. Ball caster component (1) according to one of the preceding claims, **characterized in that** the bearing pin (4) has a constant outer diameter (D) over its entire length (L).

13. Ball caster component (1) according to one of the preceding claims, **characterized in that** the spring arms (7) are separated from each other by gaps (8) extending in parallel with an axis (GA) of the thread or an axis (PA) of the seat.

14. Kit for a ball caster component (1) according to one of the preceding claims, comprising
- a ball (2), in particular a steel ball,
- a bearing means (3), in which the ball (2) can be rotatably mounted,
- and a bearing pin (4) having a recess (9) in which the bearing means (3) can be held, and furthermore having an internal or external thread (12, 19) or a seat (20),
wherein the bearing means (3) comprises a bearing shell (5) which forms a substantially semi-spherical bearing cup (6) for abutment of the ball (2), wherein the bearing shell (5) can be locked in the recess (9),
and **characterized in that** the bearing shell (5) forms a plurality of spring arms (7) and the bearing shell (5) can be locked in the recess (9) by means of the spring arms (7), wherein in the locked state, the spring arms (7) narrow the bearing shell (5) to such an extent that the ball (2) is held in the bearing cup (6).

## Revendications

1. Ensemble roulette (1), comprenant :
- une bille (2), notamment une bille d'acier,
- un dispositif formant palier (3), dans lequel la bille (2) est montée à rotation,
et
- un axe de montage (4), qui présente un évidement (9) dans lequel est maintenu le dispositif formant palier (3), de sorte que la bille (2) dépasse partiellement hors de l'axe de montage (4) et qui présente en outre un filetage intérieur ou extérieur (12, 19) ou un ajustement fin (20) pour la fixation de l'axe de montage (4),
sachant notamment qu'un axe de filetage (GA) d'un filetage ou un axe d'ajustement fin (PA) passe par le centre de la bille (2),
sachant que le dispositif formant palier (3) comprend une coquille de coussinet (5) qui forme une cuvette de palier (6) sensiblement hémisphérique pour l'application de la bille (2), et sachant que la coquille de coussinet (5) est enclenchée dans l'évidement (9), **caractérisé en ce que** la coquille de coussinet (5) forme en outre plusieurs bras de ressort (7) et **en ce que** la coquille de coussinet (5) est enclenchée dans l'évidement (9) au moyen des bras de ressort (7), sachant que dans l'état enclenché, les bras de ressort (7) resserrent la coquille de coussinet (5) sur la cuvette de palier (6) dans une mesure telle que la bille (2) est maintenue dans la cuvette de palier (6).

2. Ensemble roulette (1) selon la revendication 1, **caractérisé en ce qu'**au moins les régions de surface de la coquille de coussinet (5) qui sont tournées vers la bille (2) sont fabriquées en matière plastique.

3. Ensemble roulette (1) selon la revendication 2, **caractérisé en ce que** la coquille de coussinet (5) est fabriquée entièrement en matière plastique ou en un matériau composite à base de matière plastique, en particulier avec une matrice de matière plastique.

4. Ensemble roulette (1) selon la revendication 2 ou 3, **caractérisé en ce que** la matière plastique est un polyamide ou un polytétrafluoréthylène.

5. Ensemble roulette (1) selon l'une des revendications précédentes, **caractérisé en ce que** l'évidement (9) est réalisé avec un bord d'enclenchement ou une rainure d'enclenchement (11), en particulier avec un bord d'enclenchement entourant ou une rainure d'enclenchement entourante (11).

6. Ensemble roulette (1) selon l'une des revendications précédentes, **caractérisé en ce qu'**un bourrelet d'enclenchement (10) dépassant vers l'extérieur ou un ergot d'enclenchement dépassant vers l'extérieur est respectivement formé sur les bras de ressort (7).

7. Ensemble roulette (1) selon l'une des revendications précédentes, **caractérisé en ce que** l'axe de montage (4) est réalisé sur le côté extérieur, au moins dans une partie, avec une section non circulaire, en particulier hexagonale.

8. Ensemble roulette (1) selon l'une des revendications précédentes, **caractérisé en ce que** la coquille de coussinet (5) s'applique de façon surfacique dans l'évidement (9).

9. Ensemble roulette (1) selon l'une des revendications précédentes, **caractérisé en ce que** l'axe de montage (4) est réalisé avec un plus petit diamètre (D13) dans la région (13) d'une extrémité opposée à l'évidement que dans la région (14) de l'évidement (9) pour le dispositif formant palier (3), sachant notamment que cette région (13) de l'extrémité opposée à l'évidement (9) forme le filetage extérieur (19) ou l'ajustement fin (20).

10. Ensemble roulette (1) selon la revendication 9, **caractérisé en ce que** l'axe de montage (4) présente, dans une région (15) située entre la région (13) de l'extrémité opposée à l'évidement (9) et la région (14) de l'évidement (9) pour le dispositif formant palier (3), un plus petit diamètre (D15) que dans la région (13) de l'extrémité opposée à l'évidement (9).

11. Ensemble roulette (1) selon l'une des revendications précédentes, **caractérisé en ce que** l'axe de montage (4) présente un filetage extérieur (19) ou un ajustement fin (20), sachant que le filetage extérieur (19) ou l'ajustement fin (20) ne s'étend que sur une partie de la longueur de l'axe de montage (4), en particulier sur une partie éloignée de l'évidement.

12. Ensemble roulette (1) selon l'une des revendications précédentes, **caractérisé en ce que** l'axe de montage (4) présente le même diamètre extérieur (D) sur toute sa longueur (L).

13. Ensemble roulette (1) selon l'une des revendications précédentes, **caractérisé en ce que** les bras de ressort (7) sont séparés les uns des autres par des fentes (8) s'étendant parallèlement à un axe (GA) du filetage ou un axe (PA) de l'ajustement fin.

14. Jeu de pièces détachées pour un ensemble roulette (1) selon l'une des revendications précédentes, comprenant
- une bille (2), notamment une bille d'acier,
- un dispositif formant palier (3), dans lequel la bille (2) peut être montée à rotation,
- et un axe de montage (4), qui présente un évidement (9) dans lequel le dispositif formant palier (3) peut être maintenu, et qui présente en outre un filetage intérieur ou extérieur (12, 19) ou un ajustement fin (20),
sachant que le dispositif formant palier (3) comprend une coquille de coussinet (5) qui forme une cuvette de palier (6) sensiblement hémisphérique pour l'application de la bille (2),
sachant que la coquille de coussinet (5) est enclenchée dans l'évidement (9),
**caractérisé en ce que** la coquille de coussinet (5) forme plusieurs bras de ressort (7),
et **en ce que** la coquille de coussinet (5) peut être enclenchée dans l'évidement (9) au moyen des bras de ressort (7), sachant que dans l'état enclenché, les bras de ressort (7) resserrent la coquille de coussinet (5) dans une mesure telle que la bille (2) est maintenue dans la cuvette de palier (6).
